# EUROPÄISCHE PATENTSCHRIFT

(11) **EP 2 510 139 B1**
(45) Veröffentlichungstag und Bekanntmachung des Hinweises auf die Patenterteilung: **19.02.2014**
(21) Anmeldenummer: 10785429.1
(22) Anmeldetag: 03.12.2010
(51) Int. Cl.: D01D 13/00, B29C 47/92, B65H 63/00, G05B 19/042

(54) **STEUEREINRICHTUNG ZUM STEUERN EINER SCHMELZSPINNMASCHINE**
CONTROL DEVICE FOR A MELT-SPINNING APPARATUS
DISPOSITIF DE COMMANDE POUR UN DISPOSITIF DE FILAGE A L'ETAT FONDU

(30) Priorität: 11.12.2009 DE 102009057941; 30.03.2010 DE 102010013408
(43) Veröffentlichungstag der Anmeldung: 17.10.2012
(73) Patentinhaber: Oerlikon Textile GmbH & Co. KG, 42897 Remscheid (DE)
(72) Erfinder: SAUER, Arnulf, 57368 Lennestadt (DE)
(74) Vertreter: Kahlhöfer, Hermann
(86) Internationale Anmeldenummer: PCT/EP2010/068847
(87) Internationale Veröffentlichungsnummer: WO 2011/069911

(56) Entgegenhaltungen:
- WO-A1-2006/069642
- WO-A1-2006/076933
- DE-A1- 10 039 093
- DE-A1- 10 153 457

## Beschreibung

Die Erfindung betrifft eine Steuereinrichtung zum Steuern einer Schmelzspinnmaschine gemäß Anspruch 1.

Bei der Herstellung von synthetischen Fäden mittels einer Schmelzspinnmaschine wird zunächst eine von einer Schmelzequelle, beispielsweise einem Extruder, kommende Kunststoffschmelze mit Hilfe einer Pumpe unter Druck auf mehrere Spinndüsen mit einer Vielzahl von Düsenbohrungen verteilt und zu mehreren Filamentbündeln gesponnen. Die Filamentbündel werden nach Abkühlung jeweils zu einem Faden zusammengefasst und mittels einer Aufwickeleinrichtung abgezogen und zu einer Spule aufgewickelt. Je nach Art der gewünschten Fadenqualität wird vor dem Aufwickeln eine weitere Behandlung, beispielsweise durch eine oder mehrere Galetten einer Verstreckeinrichtung erfolgen. Dabei erfährt der Faden durch unterschiedliche Umfangsgeschwindigkeiten und Temperaturen der Galettenmäntel eine thermomechanische Behandlung. Weiterhin sind bei der Schmelzspinnmaschine neben den oben genannten Aggregaten Nebenaggregate vorgesehen, wie beispielsweise Mittel zum dosierten Auftragen von Präparation.

Die Schmelzspinnmaschine ist aus mehreren parallel angeordneten gleichartigen Arbeitsfeldern aufgebaut, auf denen jeweils mehrere Fäden in Form einer Fadenschar bearbeitet werden. Dabei wird die Fadenschar innerhalb des Arbeitsfeldes durch mehrere Arbeitsstationen extrudiert, abgezogen, verstreckt und zu Spulen aufgewickelt.

Die einzelnen Arbeitsstationen der Schmelzspinnmaschine beziehungsweise der Arbeitsfelder werden dabei mittels einer Steuereinrichtung koordiniert angesteuert. Eine gattungsgemäße Steuereinrichtung ist aus der Offenlegungsschrift DE 100 39 093 A1 bekannt. Hier werden die jeweils einem Fadenlauf beziehungsweise einer Fadenschar zugeordneten Arbeitsstationen bzw. deren Aggregate durch ein diesem Arbeitsfeld zugeordnetes Steuergerät angesteuert. Ein übergeordnetes Steuersystem steuert und koordiniert wiederum die einzelnen Steuergeräte sowie Aggregate, die mehreren Arbeitsfeldern gemeinsam zugeordnet sind, wie dem Extruder, an. Hierbei kommt eine Vielzahl gleicher Steuergeräte zum Einsatz.

Ein Nachteil dieser Struktur ist, dass die Struktur der Steuerung relativ starr an die Struktur der Schmelzspinnmaschine angelehnt ist. Zudem muss ein übergeordnetes Steuergerät vorgehalten werden.

Es ist daher Aufgabe der Erfindung, eine kostengünstige Steuereinrichtung für Schmelzspinnmaschinen bereit zu stellen, die dennoch leicht an unterschiedliche Konfigurationen der Schmelzspinnmaschine angepasst werden kann.

Diese Aufgabe wird dadurch gelöst, dass mehrere Steuergeräte vorgesehen sind und dass jeweils eine der Arbeitsstationen eines der Arbeitsfelder jeweils einem der Steuergeräte zugeordnet ist, und dass die Steuergeräte über zumindest eine Datenleitung ohne übergeordnete Master-Steuerung unmittelbar miteinander verbunden sind.

Weitere vorteilhafte Weiterbildungen der Erfindung sind durch die Merkmale und Merkmalskombinationen der jeweiligen Unteransprüche definiert.

Die Erfindung verlässt das bekannte Konzept einer zentralen Steuereinrichtung für eine Schmelzspinnmaschine, bei welcher die innerhalb einer der Arbeitsfelder angeordneten Arbeitsmittel der Arbeitsstationen zu einer Steuereinheit zusammengeschlossen sind, und wählt ein sich an den gleichartigen Arbeitsstationen orientiertes Steuerungskonzept. Hierbei wird jedes Arbeitsfeld logisch in einzelne Arbeitsstationen unterteilt, jede der Arbeitsstationen des Arbeitsfeldes wird einzelnen Steuergeräten zugeordnet und die einzelnen Steuergeräte sind mittels einer Datenleitung direkt miteinander verbunden und kommunizieren direkt miteinander, wodurch die Koordination der Steuergeräte untereinander erfolgt. Damit wird eine übergeordnete Master-Steuerung entbehrlich. Durch den ständigen Datenaustausch ist sichergestellt, dass die innerhalb eines Arbeitsfeldes zusammenwirkenden Arbeitsstationen koordiniert zur Fadenherstellung betrieben werden können. Dabei wird die Datenleitung vorzugsweise als eine Ethernetverbindung ausgebildet, so dass ganze Datenpakete zwischen den Steuergeräten austauschbar sind. Die Datenleitung kann auch ein Bussystem oder eine direkte digitale bzw. analoge Verbindung sein.

Durch die in der Schmelzspinnmaschine erfindungsgemäß vertikal ausgerichtet Steuerungsebenen können auch vorteilhaft einzelne Arbeitsstationen gleicher Art innerhalb der Arbeitsfelder unabhängig von benachbarten Arbeitsstationen schnell ausgetauscht werden. Die benachbarten Steuerungsebenen bleiben hiervon unberührt. Insbesondere für Schmelzspinnmaschinen bietet dieses Steuerungskonzept einen besonderen Vorteil, da je nach Fadentype unterschiedliche Arbeitsmittel in den Arbeitsstationen insbesondere in Fadenbehandlungsvorrichtung zum Einsatz kommen. So ist bekannt POY-, FDY-, BCF- oder IDY- Fäden mit verschiedenen Arbeitsmitteln in der Fadenbehandlung herzustellen.

Gleichartige Arbeitsstationen benachbarter Arbeitsfelder lassen sich gemäß einer vorteilhaften Weiterbildung der Erfindung bevorzugt zu einem Steuerverbund zusammenfügen, so dass die Arbeitsstationen gemeinsam mit einem der Steuergeräte verbunden sind. Damit lässt sich der Steuerungsaufwand selbst für eine Vielzahl von Arbeitsfeldern mit mehreren Arbeitsstationen auf ein Minimum reduzieren. Dies hat insbesondere bei Arbeitsstationen mit geringer Zahl zu steuernder Aktoren und Sensoren einen vereinfachten Aufbau zur Folge und weist Kostenvorteile auf.

Zur Herstellung synthetischer Fäden weisen die Arbeitsstationen als Arbeitsmittel zumindest eine Spinnvorrichtung, eine Fadenbehandlungsvorrichtung und eine Aufwickelvorrichtung auf, wobei eine steuerliche Trennung bevorzugt zwischen der Aufwicklung und Fadenbehandlung erfolgt.

Dadurch wird ein Steuergerät für die Aufwickelvorrichtung eingesetzt. Ein weiteres Steuergerät ist somit der Fadenbehandlungsvorrichtung zugeordnet. Zusätzlich oder alternativ ist ein weiteres Steuergerät für die Spinnvorrichtung vorgesehen.

Der Vorteil derartiger Schmelzspinnmaschinen liegt darin, dass eine Modularisierung der Steuergeräte dadurch wirkungsvoll unterstützt wird. Verschiedene Typen von Schmelzspinnmaschinen unterscheiden sich hauptsächlich in der Bestückung der Fadenbehandlungsvorrichtung. So weisen Schmelzspinnmaschinen für voll verstreckte Fäden eine höhere Anzahl von teilweise beheizten Galetten auf. Bei einer erfindungsgemäßen Steuereinrichtung wird ein Steuergerät für die jeweils gleichartigen Aufwickelvorrichtungen mehrerer Arbeitsfelder verwendet. Dieses Steuergerät ist bei den verschiedenen Schmelzspinnmaschinen-Typen gleich. Für die unterschiedlich bestückten Fadenbehandlungsvorrichtungen können zwei oder mehr verschiedene Steuergeräte vorgehalten werden, die abhängig von der Bestückung der Fadenbehandlungsvorrichtung zum Einsatz kommen. Diese Steuergeräte selbst sind aber relativ einfach aufgebaut, so dass die Modularisierung und die Vorhaltung verschiedener Varianten kostengünstig möglich sind. Insbesondere ist es durch diese Struktur einfacher möglich, eine strikte Trennung zwischen der Spinnvorrichtung einerseits und den beiden darunter angeordneten Fadenbehandlungs- und Aufwickelvorrichtungen andererseits vorzunehmen. Mit dieser Trennung ist es einfacher möglich, standardisierte Spinnvorrichtungen mit flexibel angepassten Fadenbehandlungs- und Aufwickelvorrichtungen zu kombinieren.

Bei einer steuerlichen Trennung zwischen der Aufwickelvorrichtung und der Fadenbehandlungsvorrichtung weist die Aufwickelvorrichtung vorzugsweise ein Spulkopf mit mehreren Wickelstellen zum kontinuierlichen Aufwickeln der Fäden auf. Die Fadenbehandlungsvorrichtung enthält dabei vorzugsweise mehrere Galetten zum Verstrecken der Fäden.

In einer anderen Ausführungsvariante enthält die Aufwickelvorrichtung einen Spulkopf sowie Galetten. Dies ist beispielsweise dann sinnvoll, wenn Spulkopf und Galetten in einer baulichen Einheit integriert sind, so dass beide Aggregate gemeinsam durch das zugeordnete Steuergerät steuerbar sind.

Es besteht jedoch auch die Möglichkeit, dem Steuergerät, das der Aufwickelvorrichtung zugeordnet ist, zusätzliche Aggregate aus der Fadenbehandlungsvorrichtung zuzuordnen. Somit lässt sich das Zusammenwirken zwischen Spulkopf und Galetten bei der Fadenherstellung bei bestimmten Prozessen noch optimieren.

Grundsätzlich wäre es jedoch auch möglich, die Steuergeräte für die Aufwickelvorrichtung und die Fadenbehandlungsvorrichtung durch ein gemeinsames Steuergerät zu bilden. Dies ist insbesondere dann vorteilhaft, wenn beispielsweise die Fadenbehandlungsvorrichtung wenige Aggregate aufweist.

In einer Weiterbildung der Erfindung sind die Steuergeräte mit einer Bedieneinheit verbunden, die jedoch nicht die Aufgaben eines Master-Steuergerätes erfüllt. Damit lässt sich der Zugriff auf die gleichberechtigten Steuergeräte für eine Bedienperson verbessern, so dass beispielsweise Vorgaben zur Veränderungen von Prozessparametern in den Arbeitsstationen über die Bedieneinheit dem jeweilig zugeordneten Steuergerät erfolgen können.

In einer bevorzugten Weiterbildung stellt diese Bedieneinheit Software-Updates für die Steuergeräte bereit. Dies erfolgt durch ein geeignetes Mittel, beispielsweise durch einen Speicher oder einen anderem Datenträger.

Diese Bedieneinheit oder alternativ eine weitere Bedieneinheit kann über ein Wide Area Network, beispielsweise über das Internet oder über eine Modem-Verbindung verbunden sein. Dadurch kann über eine räumliche Distanz Hilfestellung, Fehlerdiagnose oder ein Software-Update zur Verfügung gestellt werden.

Ein Ausführungsbeispiel der erfindungsgemäßen Steuereinrichtung für eine Schmelzspinnmaschine wird im Folgenden unter Hinweis auf die beigefügten Zeichnungen näher beschrieben.

Es stellen dar:
Fig. 1: Eine erfindungsgemäße Steuereinrichtung zum Steuern einer Schmelzspinnmaschine,
Fig. 2 eine erfindungsgemäße Steuereinrichtung zum Steuern einer Variante der Schmelzspinnmaschine,
Fig. 3 eine erfindungsgemäße Steuereinrichtung zum Steuern einer weiteren Variante der Schmelzspinnmaschine,

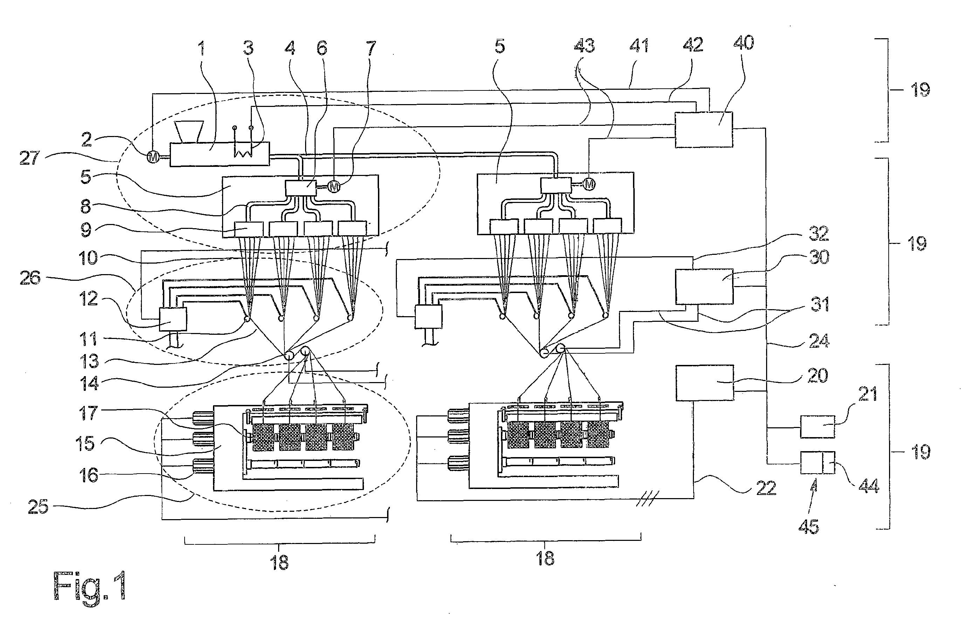

Figur 1 zeigt eine erfindungsgemäße Steuereinrichtung zum Steuern einer Schmelzspinnmaschine.

Zur Herstellung einer Vielzahl synthetischer Fäden ist innerhalb der Schmelzspinnmaschine eine Mehrzahl verschiedener Arbeitsmittel zu einem Materialfluss nacheinander angeordnet, um in mehreren Arbeitsschritten aus einem Polymer beispielsweise in Form eines Granulats eine Mehrzahl synthetischer Fäden herzustellen. Bei dem gezeigten Ausführungsbeispiel der Schmelzspinnmaschine beginnt die Kette der Arbeitsmittel mit einem Extruder 1.Von dem Extruder 1, der über einen Extruderantrieb 2 angetrieben und mittels einer Extruderheizung 3 beheizt ist, wird das in Form eines Granulats vorgegeben Polymermaterial zu einer Polymerschmelze aufgeschmolzen und über mehrere Schmelzeleitungen 4 zu mehreren Spinnbalken 5 verteilt. Aus Gründen der Übersichtlichkeit sind hier nur zwei Spinnbalken 5 dargestellt. In der Regel werden mehrere Spinnbalken 5 zum Einsatz kommen. Ebenso ist es möglich, mehrere Extruder 1 oder alternativ eine Polymerisationsanlage zur Bereitstellung einer Polymerschmelze zu verwenden.

Innerhalb des Spinnbalkens 5 wird die Polymerschmelze zunächst einer Schmelzedosierpumpe 6 zugeführt, die die Schmelze dosiert und über mehrere Verteilerleitungen 8 auf mehrere Spinnpakete 9 verteilt. Diese Spinnpakete 9 enthalten Düsenplatten mit einer Vielzahl von Düsenbohrungen, aus denen eine Vielzahl von Filamenten extrudiert werden, welche als ein Filamentbündel 10 austreten und zu jeweils einen Faden 13 zusammengefasst werden. Üblicherweise wird an dem Punkt, an dem die Filamentbündel 9 zu Fäden 13 zusammengefasst werden, mittels einer Präparationseinrichtung 11 eine Präparation aufgetragen. Die Präparationseinrichtungen 11 werden durch eine gemeinsame Präparationspumpe 12 über die dargestellten Verbindungsleitungen mit dem Präparationsmittel versorgt.

Anschließend werden die Fäden 13 in Form einer Fadenschar über zwei angetriebene Galetten 14 geführt und anschließend einem Spulkopf 15 zugeführt, wo die Fäden 13 in mehreren Wickelstellen parallel zu mehreren Spulen 17 aufgewickelt werden. Hierzu weist der Spulkopf 15 mehrere Antriebe 16 auf, wobei hier exemplarisch und stellvertretend für alle Antriebe, Aktoren und Sensoren nur drei Motoren dargestellt sind.

Zur Steuerung alle Arbeitsmittel ist die Schmelzspinnmaschine sowohl vertikal als auch horizontal in mehrere Einheiten gegliedert. Zunächst wird in vertikaler Richtung von jedem Spulkopf 15 und den darüber angeordneten Arbeitsmittel, die in der Prozesskette der Fadenherstellung vorgeordnet sind, ein Arbeitsfeld 18 definiert. Ein solches Arbeitsfeld 18 könnte als kleinste für sich funktionsfähige Einheit der Schmelzspinnmaschine angesehen werden, auch wenn wie hier dargestellt sich mehrere Arbeitsfelder 18 einen gemeinsamen Extruder 1 teilen. In dem Arbeitsfeld 18 wird eine Gruppe von Fäden 13 als Fadenschar hergestellt und gemeinsam zu Spulen 17 aufgewickelt. In dem gezeigten Ausführungsbeispiel sind zwei benachbarte Arbeitsfelder 18 gezeigt. In Praxis weisen derartige Schmelzspinnmaschinen eine Mehrzahl derartiger Arbeitsfelder 18 auf.

In horizontaler Richtung unterteilen sich die Arbeitsfelder 18 in verschiedene Arbeitsstationen 19, die ein oder mehrere Arbeitsmittel zur Durchführung eines oder mehrerer Arbeitsschritte in der Prozesskette enthalten. So können beispielsweise, wie in Figur 1 dargestellt, eine oberste Arbeitsstation 19 den Extruder 1 beinhalten, eine darunter angesiedelte mittlere Arbeitsstation 19 beinhaltet die Galetten 14 und eine unten angesiedelte Arbeitsstation 19 beinhaltet den Spulkopf 15. Dabei sind die Grenzen zwischen den Arbeitsstationen 19 erfindungsgemäß nicht festgelegt. Insbesondere die Grenze zwischen der untersten und der mittleren Arbeitsstation 19 kann abhängig von den Rahmenbedingungen unterschiedlich festgelegt werden, das heißt bestimmte Arbeitsmittel könnten sowohl der untersten als auch der mittleren Arbeitsstation zugeordnet werden.

In dem in Figur 1 dargestellten Ausführungsbeispiel sind die den Arbeitsstationen 19 zugeordneten Arbeitsmitteln in Gruppen zu einer Aufwickelvorrichtung 25, einer Fadenbehandlungsvorrichtung 26 und einer Spinnvorrichtung 27 zusammengefasst. Insoweit enthält die obere Arbeitsstation 19 die Arbeitsmittel der Spinnvorrichtung 27, die mittlere Arbeitsstation 19 die Arbeitsmittel der Fadenbehandlungsvorrichtung 26 und die untere Arbeitsstation 19 die Arbeitsmittel der Aufwickelvorrichtung 25.

Die Steuereinrichtung der in Figur 1 dargestellten Schmelzspinnmaschine unterteilt sich in mehrere Steuergeräte 20, 30 und 40, die den einzelnen Arbeitsstationen 19 zugeordnet sind. So ist das Steuergerät 40 den Arbeitsmitteln der Spinnvorrichtung 27 zugeordnet. Die Arbeitsmittel der Fadenbehandlungsvorrichtung 26 wird über das Steuergerät 30 und die Arbeitsmittel der Aufwickelvorrichtung 25 über das Steuergerät 20 gesteuert.

Das der Spinnvorrichtung 27 zugeordnete Steuergerät 40 ist über mehrere Steuerleitungen 41 und 42 mit dem Extruderantrieb 2 und der Extruderheizung 3 sowie über mehrere Steuerleitung 43 mit den Schmelzedosierpumpenantrieben 7 verbunden und steuert diese an. Weiterhin ist das Steuergerät 40 über hier nicht dargestellte Steuerleitungen mit Sensoren verbundenen, die beispielsweise der Erfassung des Schmelzedrucks, der Schmelzetemperatur oder der Temperatur des Spinnbalkens 5 dienen. Das Steuergerät 40 ist über die Steuerleitungen 43 auch mit Arbeitsmitteln der Arbeitsstation des benachbarten Arbeitsfeldes 18 verbunden. So sind die Schmelzedosierpumpenantriebe 7 des benachbarten Arbeitsfeldes 18 ebenfalls dem Steuergerät 40 zugeordnet. Die Spinnvorrichtung 27 des benachbarten Arbeitsfeldes 18 ist dabei an dem zentralen Extruder 1 angeschlossen.

Das der mittleren Arbeitsstation je einem Arbeitsfeld 18 zugeordnete Steuergerät 30, das der Fadenbehandlungsvorrichtung 26 zugeordnet ist, ist über mehrere Steuerleitungen 31 mit den Antriebseinheiten der Galetten 14 sowie über eine Steuerleitung 32 mit den Antriebseinheiten der Präparationspumpe 12 verbunden. Aus Übersichtsgründen nicht dargestellt, aber erfindungsgemäß enthalten sind hier nicht dargestellte Nebenaggregate und Sensoren, die der Fadenbehandlungsvorrichtung 26 zuzuordnen sind. Ebenfalls aus Gründen der Übersichtlichkeit ist das Steuergerät 30 hier nur für ein Arbeitsfeld 18 dargestellt. Erfindungsgemäß verfügt jedes Arbeitsfeld 18 über ein eigenes Steuergerät 30.

Das der unteren Arbeitsstation zugeordnete Steuergerät 20 steuert die Antriebe und Sensoren der Aufwickelvorrichtung 25 über eine Steuerleitung 22 an. Die Aufwickelvorrichtung 25 weist in diesem Ausführungsbeispiel den Spulkopf 15 auf. Auch hier ist aus Gründen der Übersichtlichkeit das Steuergerät nur für ein Arbeitsfeld 18 dargestellt. Erfindungsgemäß verfügt jedes der Arbeitsfelder 18 über ein eigenes Steuergerät 20.

Die dem ersten Arbeitsfeld 18 zugeordneten Steuergeräte 20, 30 und 40 sind über eine Datenleitung 24 miteinander verbunden. Die Datenleitung 24 könnte beispielsweise als eine Ethernetverbindung ausgebildet sein. Über die Datenleitung 24 kommunizieren die Steuergeräte 20, 30 und 40 miteinander. In der Regel wird die Datenleitung 24 eine Bus-Leitung oder eine Netzwerkverbindung sein. Es ist aber auch möglich, die Verbindung mittels einer oder mehrerer analoger Leitungen zu realisieren. Darüber hinaus sind die Steuergeräte 20, 30 und 40 mit einem Bediengerät 21 verbunden, dass in die Datenleitung 24 mit eingebunden ist. Dabei handelt es sich um ein Hand-Bediengerät oder um ein Prozess-Leitsystem ohne jegliche Masterfunktion. Hierüber werden Sollwerte oder Betriebsparameter entgegengenommen. Die Steuergeräte 20, 30 und 40 sind gleichrangig in der Steuerhierarchie und wirken zur Steuerung aller Arbeitsmittel eines Arbeitsfeldes zusammen. Die Koordination zwischen den Steuergeräten 20,30 und 40 erfolgt ausschließlich über einen ständigen Datenaustausch zwischen den Steuergeräten.

Parallel ist in diesem Ausführungsbeispiel ein weiteres Bediengerät 45 mit den Steuergeräten 20, 30 und 40 verbunden. Dieses weist ein Mittel zum Bereitstellen von Updates 44 auf, über welches Updates an die Steuergeräte 20, 30 und 40 übertragen werden. Bei dem Mittel zum Bereitstellen von Updates handelt es sich um einen Datenträger oder Speicher. Dies kann beispielsweise ein USB-Stick oder eine CD-Rom sein. Alternativ kann dies auch ein Bereich des Arbeitsspeichers eines Computers sein, in den zuvor das Update geladen wurde. Eines der Bediengeräte 21 oder 45 kann über eine Wide Area Network-Verbindung angeschlossen sein, beispielsweise über das Internet oder über eine Modemverbindung. Somit kann sich dieses Bediengerät beispielsweise in einer Servicestation des Herstellers befinden, der dem Anwender auf diese Weise unterstützt.

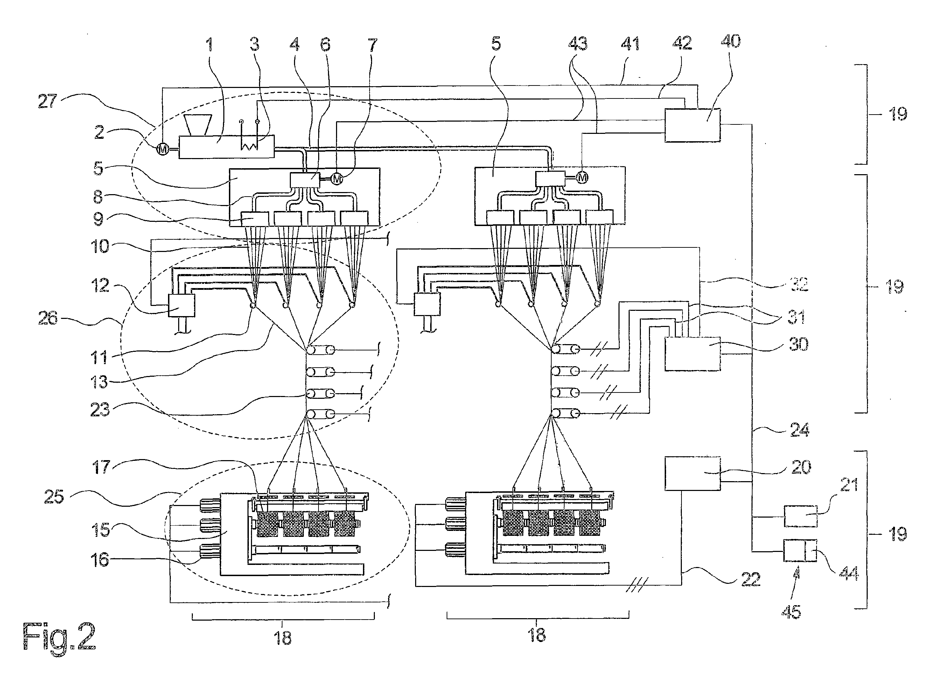

In Figur 2 ist ein weiteres Ausführungsbeispiel der erfindungsgemäßen Steuereinrichtung für eine Variante der Schmelzspinnmaschine aus Figur 1 dargestellt. Das Ausführungsbeispiel ist im wesentlich mit dem Ausführungsbeispiel aus Fig. 1 identisch, so dass hier nur die Unterschiede zu Figur 1 beschrieben werden und ansonsten Bezug zu der vorgenannten Beschreibung genommen wird.

Bei dem in Fig. 2 gezeigten Ausführungsbeispiel ist die Fadenbehandlungsvorrichtung 26 der mittleren Arbeitsstation 19 in einer geänderten Konfiguration innerhalb des Arbeitsfeldes 18 ausgebildet. Die Fadenbehandlungsvorrichtung 26 weist hier pro Arbeitsfeld 18 mehrere Galettenduos 23 auf, die darüber hinaus auch beheizt sein können. Derartige Fadenbehandlungsvorrichtung 26 werden insbesondere zur Herstellung von hochverstreckten Fäden eingesetzt. Die Vielzahl von Antrieben und Heizungen in den Galettenduos 23 erfordert ein komplexeres Steuergerät 30, das ein Vielfaches der Arbeitsmittel des Steuergerätes 30 aus Figur 1 ansteuern muss. Das Steuergerät 30 ist über die Datenleitung 24 mit den benachbarten Steuergeräten 20 und 40 gekoppelt, um den Herstellungsprozess in dem Arbeitsfeld zu steuern. Die Datenleitung 24 kann als reine Datenleitung oder auch als Steuerleitung mit Datenaustausch ausgebildet sein.

Hier wird auch der Vorteil der erfindungsgemäßen Steuereinrichtung deutlich. Um eine Vielzahl von unterschiedlichen Schmelzspinnmaschinen mit einer Steuereinrichtung auszurüsten kann diese modular aus einem Baukastensystem zusammengestellt werden.

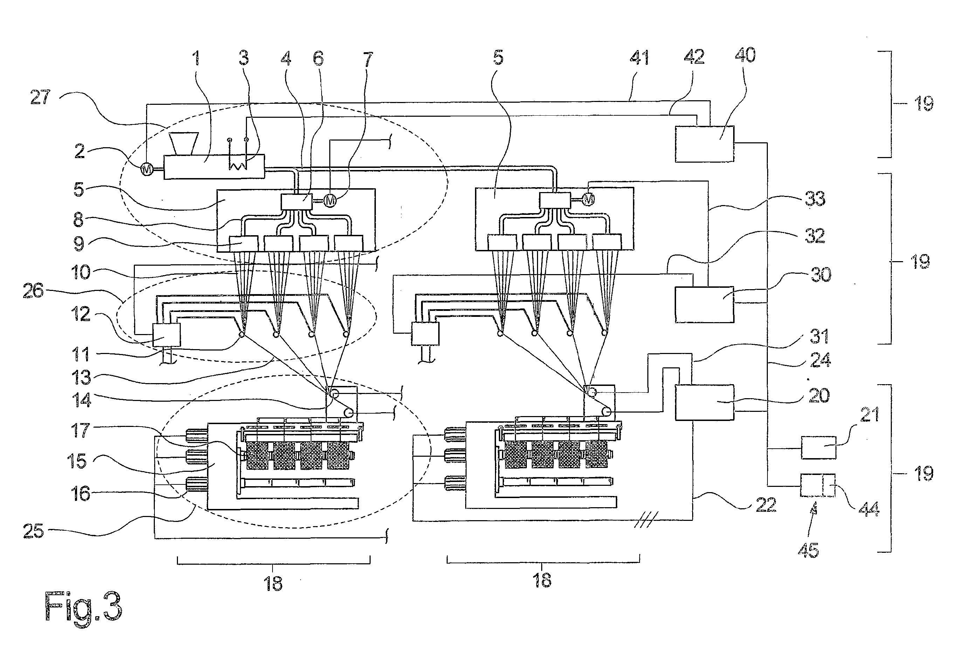

Figur 3 stellt ein weiteres Ausführungsbeispiel der erfindungsgemäßen Steuereinrichtung für eine weitere Variante der Schmelzspinnmaschine aus Figur 1 dar. Im Unterschied zu Figur 1 weist die Aufwickelvorrichtung 25 hier neben dem Spulkopf 15 auch mehrere Galetten 14 auf, die direkt mit dem Spulkopf 15 in Form einer gemeinsamen Baueinheit verbunden sind. Dadurch ändert sich die Aufteilung der Steuereinrichtung in der Form, dass die Steuerung der Galetten14 nun dem der Aufwickelvorrichtung 25 zugeordneten Steuergerät 20 obliegt. Das Steuergerät 20 ist über die Steuerleitungen 31 mit den Galettenantrieben der Galetten 14 und über die Steuerleitungen 22 mit den Antrieben des Spulkopf 15 verbunden. Das benachbarte Steuergerät 30 ist somit nur noch mit Arbeitsmitteln der Fadenbehandlungsvorrichtung 27 oberhalb des Spulkopfes 15 verbunden. Zusätzlich wird daher hier nun die Steuerung der Schmelzedosierpumpenantriebe 7 dem Steuergerät 30 zugeordnet, so dass das Steuergerät 40 nur noch mit dem Extruder 1 der Spinnvorrichtung 27 zusammenwirkt. Das mittlere Steuergerät 30 ist hierzu über die Steuerleitung 33 mit den Schmelzedosierpumpenantrieben 7 verbunden. Dieses Beispiel zeigt lediglich eine Option für die Konfiguration der erfindungsgemäßen Steuereinrichtung. Grundsätzlich ist es möglich und sinnvoll, auch einen Spulkopf mit integrierten Galetten mit einer Steuerungsstruktur wie in Figur 1 oder 2 gezeigt zu kombinieren oder aber die Steuergeräte 30 und 40 in Figur 3 zu einem gemeinsamen Steuergerät zusammenzufassen.

Bei dem in Figur 3 dargestellten Ausführungsbeispiel besteht alternativ auch die Möglichkeit die Steuergerate 30 und 40 zu einem Steuergerät zu kombinieren, so dass das Arbeitsfeld 18 beispielsweise in zwei Arbeitsstationen aufgegliedert werden könnte. Die erste obere Arbeitsstation würde die Arbeitsmittel zum Extrudieren Spinnen und Präparieren der Fäden enthalten und die untere Arbeitsstation weist die Arbeitsmittel zum Abziehen, Verstrecken und Aufwickeln der Fäden auf. Alle Arbeitsmittel des Arbeitsfeldes würden dann durch das Zusammenwirken zweier Steuergeräte gesteuert.

### Bezugszeichenliste

- 1: Extruder
- 2: Extruderantrieb
- 3: Extruderheizung
- 4: Schmelzeleitung
- 5: Spinnbalken
- 6: Schmelzedosierpumpe
- 7: Schmelzedosierpumpenantrieb
- 8: Verteilerleitung
- 9: Spinnpaket
- 10: Filamentbündel
- 11: Präparationseinrichtung
- 12: Präparationspumpe
- 13: Faden
- 14: Galetten
- 15: Spulkopf
- 16: Antrieb
- 17: Spulen
- 18: Arbeitsfeld
- 19: Arbeitsstation
- 20: Steuergerät
- 21: Bediengerät
- 22: Steuerleitung
- 23: Galettenduo
- 24: Datenleitung
- 25: Aufwickelvorrichtung
- 26: Fadenbehandlungsvorrichtung
- 27: Spinnvorrichtung
- 30: Steuergerät
- 31 - 33: Steuerleitung
- 40: Steuergerät
- 41 - 43: Steuerleitung
- 44: Mittel zum Bereitstellen von Updates
- 45: Bediengerät

## Patentansprüche

1. Steuereinrichtung zum Steuern einer Schmelzspinnmaschine, welche mehrere gleichartige Arbeitsfelder (18) zum Herstellen mehrerer Fäden (13) pro Arbeitsfeld aufweist,
wobei jedes der Arbeitsfelder (18) mehrere Arbeitsstationen (19) mit zumindest einem Arbeitsmittel (27, 26, 25) zum Durchführen zumindest eines dieser Arbeitsstation zugeordneten Arbeitsschrittes aufweist, wobei
mehrere Steuergeräte (20, 30, 40) vorgesehen sind und wobei jeweils eine der Arbeitsstationen (19) eines der Arbeitsfelder (18) jeweils einem der Steuergeräte (20, 30, 40) zugeordnet ist, **dadurch gekennzeichnet, dass** die Steuergeräte (20, 30, 40) zum Datenaustausch über zumindest eine Datenleitung (24) ohne übergeordnete Master-Steuerung unmittelbar miteinander verbunden sind.

2. Steuereinrichtung nach Anspruch 1,
**dadurch gekennzeichnet, dass**
zumindest eines der Steuergeräte (20, 30, 40) mehreren gleichartigen Arbeitsstationen (19) mehrerer Arbeitsfelder (18) zugeordnet ist.

3. Steuereinrichtung nach Anspruch 1 oder 2,
**dadurch gekennzeichnet, dass**
eine der Arbeitsstationen (19) der Schmelzspinnmaschine als Arbeitsmittel eine Aufwickelvorrichtung (25) aufweist, die mit einem zugeordnetem Steuergerät (20) verbunden ist, und dass weitere Arbeitsstationen (19) der Schmelzspinnmaschine als Arbeitsmittel eine Fadenbehandlungsvorrichtung (26) und/oder eine Spinnvorrichtung (27) aufweisen, die separat mit zugeordneten benachbarten Steuergeräten (30, 40) verbunden sind.

4. Steuereinrichtung nach Anspruch 3,
**dadurch gekennzeichnet, dass**
mehreren Spinnvorrichtungen (27) gemeinsam dem betreffenden Steuergerät (40) der Arbeitsstation (19) zugeordnet sind.

5. Steuereinrichtung nach einem der Ansprüche 1 bis 4,
**dadurch gekennzeichnet, dass**
die Aufwickelvorrichtung (25) einen Spulkopf (15) und dass die Fadenbehandlungseinrichtung (26) mehrere Galetten (14) enthält, welche separat durch mehrere der Steuergeräte (20,30) oder gemeinsam durch eines der Steuergeräte (20) steuerbar sind.

6. Steuereinrichtung nach einem der Ansprüche 1 bis 4,
**dadurch gekennzeichnet, dass**
die Aufwickelvorrichtung (25) einen Spulkopf (15) und mehrere Galetten (14) enthält, welche gemeinsam durch eines der Steuergeräte (20) steuerbar sind.

7. Steuereinrichtung nach einem der vorhergehenden Ansprüche,
**dadurch gekennzeichnet, dass**
das der Aufwickelvorrichtung (25) zugeordnete Steuergerät (20) sowie das der Fadenbehandlungsvorrichtung (26) zugeordnete Steuergerät (30) und/oder das der Spinnvorrichtung (27) zugeordnete Steuergerät (40) mit einer Bedieneinheit (21) verbunden sind.

8. Steuereinrichtung nach Anspruch 7,
**dadurch gekennzeichnet, dass**
die Bedieneinheit (21) ein Mittel (44) zum Bereitstellen von Updates aufweist.

9. Steuereinrichtung nach Anspruch 7 oder 8,
**dadurch gekennzeichnet, dass**
die Bedieneinheit (21) oder eine zweite Bedieneinheit über ein Wide Area Network, vorzugsweise über das Internet angebunden ist.

## Claims

1. A control device for controlling a melt-spinning machine
which has a plurality of work areas (18) of the same kind for producing a plurality of yarns (13) per work area,
wherein each of the work areas (18) has a plurality of work stations (19) having at least one item of work equipment (27, 26, 25) for carrying out at least one work step assigned to this work station, wherein
a plurality of control units (20, 30, 40) are provided, and wherein in each case one of the work stations (19) of one of the work areas (18) is assigned to in each case one of the control units (20, 30, 40), the control units (20, 30, 40) are connected directly together for data exchange via at least one data line (24) without a superordinate master controller.

2. The control device as claimed in claim 1,
**characterized in that**
at least one of the control units (20, 30, 40) is assigned a plurality of work stations (19) of the same kind in a plurality of work areas (18).

3. The control device as claimed in claim 1 or 2,
**characterized in that**
one of the work stations (19) of the melt-spinning machine has, as work equipment, a wind-up device (25) which is connected to an associated control unit (20), and **in that** further work stations (19) of the melt-spinning machine have, as work equipment, a yarn treatment device (26) and/or a spinning device (27), which are connected separately to associated adjacent control units (30, 40).

4. The control device as claimed in claim 3,
**characterized in that**
a plurality of spinning device (27) are assigned jointly to the relevant control unit (40) of the work station (19).

5. The control device as claimed in one of claims 1 to 4,
**characterized in that**
the wind-up device (25) contains a winding head (15), and **in that** the yarn treatment device (26) contains a plurality of godets (14), which are controllable separately by a plurality of the control units (20, 30) or jointly by one of the control units (20).

6. The control device as claimed in one of claims 1 to 4,
**characterized in that**
the wind-up device (25) contains a winding head (15) and a plurality of godets (14), which are controllable jointly by one of the control units (20).

7. The control device as claimed in one of the preceding claims,
**characterized in that**
the control unit (20) assigned to the wind-up device (25) and also the control unit (30) assigned to the yarn treatment device (26) and/or the control unit (40) assigned to the spinning device (27) are connected to an operating unit (21).

8. The control device as claimed in claim 7,
**characterized in that**
the operating unit (21) has a means (44) for providing updates.

9. The control device as claimed in claim 7 or 8,
**characterized in that**
the operating unit (21) or a second operating unit is connected via a wide area network, preferably via the Internet.

## Revendications

1. Dispositif de commande pour la commande d'une machine de filage à chaud, qui présente plusieurs champs de travail identiques (18) pour la fabrication de plusieurs fils (13) par champ de travail,
dans lequel chacun des champs de travail (18) comprend plusieurs stations de travail (19) avec au moins un moyen de travail (27, 26, 25) pour exécuter au moins une opération associée à cette station de travail, dans lequel il est prévu plusieurs appareils de commande (20, 30, 40) et dans lequel chaque fois une des stations de travail (19) d'un des champs de travail (18) est respectivement associée à un des appareils de commande (20, 30, 40),
**caractérisé en ce que** les appareils de commande (20, 30, 40) sont reliés directement l'un à l'autre pour l'échange de données via au moins une ligne de données (24) sans commande-maître prioritaire.

2. Dispositif de commande selon la revendication 1, **caractérisé en ce qu'**au moins un des appareils de commande (20, 30, 40) est associé à plusieurs stations de travail identiques (19) de plusieurs champs de travail (18).

3. Dispositif de commande selon la revendication 1 ou 2, **caractérisé en ce qu'**une des stations de travail (19) de la machine de filage à chaud présente comme moyen de travail un dispositif d'enroulement (25), qui est relié à un appareil de commande associé (20), et **en ce que** d'autres stations de travail (19) de la machine de filage à chaud présentent comme moyens de travail un dispositif de traitement de fil (26) et/ou un dispositif de filage (27), qui sont reliés séparément à des appareils de commande voisins associés (30, 40).

4. Dispositif de commande selon la revendication 3, **caractérisé en ce que** plusieurs dispositifs de filage (27) sont associés en commun à l'appareil de commande correspondant (40) de la station de travail (19).

5. Dispositif de commande selon l'une quelconque des revendications 1 à 4, **caractérisé en ce que** le dispositif d'enroulement (25) comporte une tête de bobinage (15) et **en ce que** le dispositif de traitement de fil (26) comporte plusieurs galettes (14), qui peuvent être commandées séparément par plusieurs des appareils de commande (20, 30) ou en commun par un des appareils de commande (20).

6. Dispositif de commande selon l'une quelconque des revendications 1 à 4, **caractérisé en ce que** le dispositif d'enroulement (25) comporte une tête de bobinage (15) et plusieurs galettes (14), qui peuvent être commandées en commun par un des appareils de commande (20).

7. Dispositif de commande selon l'une quelconque des revendications précédentes, **caractérisé en ce que** l'appareil de commande (20) associé au dispositif d'enroulement (25) ainsi que l'appareil de commande (30) associé au dispositif de traitement de fil (26) et/ou l'appareil de commande (40) associé au dispositif de filage (27) sont reliés à une unité de commande (21).

8. Dispositif de commande selon la revendication 7, **caractérisé en ce que** l'unité de commande (21) présente un moyen (44) pour préparer des mises à jour.

9. Dispositif de commande selon la revendication 7 ou 8, **caractérisé en ce que** l'unité de commande (21) ou une deuxième unité de commande sont reliées par un réseau à grande distance, de préférence par l'Internet.
